# EUROPEAN PATENT SPECIFICATION

(11) **EP 3 951 799 B1**
(45) Date of publication and mention of the grant of the patent: **12.07.2023**
(21) Application number: 20819270.8
(22) Date of filing: 05.03.2020
(51) Int. Cl.: C04B 35/51, G21C 3/62, G21C 21/02, C01G 43/025

(54) **METHOD FOR PRODUCING CERAMIC NUCLEAR FUEL WITH A BURNABLE ABSORBER**
VERFAHREN ZUR HERSTELLUNG VON KERAMISCHEM KERNBRENNSTOFF MIT EINEM BRENNBAREN ABSORBER
PROCÉDÉ DE PRODUCTION DE COMBUSTIBLE NUCLÉAIRE CÉRAMIQUE AVEC ABSORBEUR COMBUSTIBLE

(30) Priority: 07.06.2019 RU 2019117736
(43) Date of publication of application: 09.02.2022
(73) Proprietor: Joint-Stock Company "Machinery Manufacturing Plant", Moscow region, g. Elektrostal, 144001 (RU)
(72) Inventor: VOYTENKO, Maksim Yur'yevich, selo Bogashevo, 634570 (RU); KARPEEVA, Anastasiya Evgen'evna, g. Reutov, 143964 (RU); PAHOMOV, Dmitriy Sergeevich, g. Noginsk, 142410 (RU); SKOMOROHA, Andrey Evgen'evich, g. Elektrostal, 144009 (RU); TIMOSHIN, Ignat Sergeevich, g. Elektrostal', 144005 (RU)
(74) Representative: Yalçiner Patent and Consulting Ltd.
(86) International application number: PCT/RU2020/000116
(87) International publication number: WO 2020/246909

(56) References cited:
- KZ-A4- 30 987
- RU-A- 2015 111 305
- RU-C1- 2 353 988
- RU-C1- 2 353 988
- RAVINDRAN P ET AL: "A feasibility study of the preparation of (U,Gd)"3O"8 solid solutions by thermal decomposition of co-precipitated carbonate mixtures", JOURNAL OF NUCLEAR MATERIALS, ELSEVIER B.V, NETHERLANDS, vol. 257, no. 2, 1 November 1998 (1998-11-01), pages 189-193, XP027237726, ISSN: 0022-3115 [retrieved on 1998-11-01]

## Description

### TECHNICAL FIELD

The invention relates to the nuclear industry, in particular, to a technology for producing a ceramic nuclear fuel for for nuclear reactor fuel rods (TVEL).

One of the directions for improving the safety of reactors and improving the technical and economic indicators of nuclear power plants is associated with the use of uranium-gadolinium fuel with a high content of a burnable absorber (8.00-12.00 wt% Gd₂O₃). In the manufacture of fuel with a high content of gadolinium oxide, it is necessary to maintain the oxygen potential throughout the entire technological stage of sintering. This is possible whith the use of additional components containing an excessive concentration of oxygen compared to the main starting material.

### BACKGROUND

The method of obtaining uranium-gadolinium nuclear fuel is known, including the preparation of an alloying composition containing aluminum hydroxide in an amount of 5-10% wt., gadolinium hydroxide in an amount of 30-40%, the balance is UOz, mixing the alloying composition with a solid inert lubricant and UOz, compressing the mixture and sintering the pellets (RU 2502141, publ. 20.12.2013). Due to the introduction of these additives, the grain size increases, and it becomes possible to adjust the porosity and oxygen coefficient.

The disadvantage of this method is significant labor and energy costs caused by additional operations to obtain nanopowders of Gd(OH)₃ and Al(OH)₃ (chemical precipitation from dilute chloride (nitric acid) solutions, washing the precipitate, and its drying at room temperature for 48 hours) and the use of aqueous solutions of the plasticizer. The introduction of aqueous solutions leads to the formation of free uranium dioxide particles, which implies additional operations for their preparation and liquid removal. The pellets obtained according to the "wet" scheme have a large open porosity, and the plasticizer may not be completely removed from them.

A known method of obtaining high burnup uranium-gadolinium nuclear fuel based on uranium dioxide, including the preparation of powders of uranium dioxide, gadolinium oxide, chromium oxide, and aluminum oxide, plasticizer, powders of chromium oxide and aluminum oxide are preliminarily air calcinated at temperatures from 700 to 800°C and ground to particle size less than 40 microns; a homogeneous mixture of uranium dioxide, gadolinium oxide, aluminum oxide, and chrome oxide powders with plasticizer is prepared, then a molding powder is prepared, pellets are compressed from the molding powder, followed by their high-temperature sintering and polishing (RU 2362223, publ. 20.07.2009).

The disadvantage of this method is the use of a large number of additives and the plasticizer, which implies additional operations in the form of preliminary air calcination and additional grinding. This method of producing uranium-gadolinium pellets is also characterized by significant labor and energy costs.

The closest to the proposed method is a method of making nuclear fuel pellets with a burnable absorber, which includes preparing triuranium octoxide (uranium oxide concentrate) with a burnable absorber, preparing a molding powder, pressing, sintering, and polishing. At the stage of preparing the triuranium octoxide with a burnable absorber, both defective sintered pellets and polishing dust with any absorber content other than the nominal one in the pellets are used as raw materials. At the stage of preparing the molding powder, the triuranium octoxide is added to the charge in an amount up to 20% wt., wherein the nominal content of the burnable absorber in the pellets is achieved by varying the amount of additives in the oxide concentrate charge depending on the absorber content therein (RU 2353988, publ. 27.04.2009).

The disadvantage of this method is that only Gd₂O₃ in an amount of up to 3.50 wt.% is used as the burnable absorber, narrow range of sintering temperatures, and that the triuranium octoxide is used at only up to 20 wt.%. Also, a significant drawback is the use of zinc stearate, which, during decomposition and distillation of the residue, settles and accumulates on the surface of the heating furnace lining, which leads to the need to clean the furnace and subsequently to its destruction.

### DISCLOSURE OF THE INVENTION

The object of the present invention is to provide high-performance properties of ceramic nuclear fuel with a burnable absorber, namely, to provide an optimal oxygen ratio and other characteristics of fuel pellets (sintered pellet density, volume fraction of open pores, grain diameter, after-sinterability).

The technical result of the invention is to increase the values of the oxygen coefficient values (the ratio of the number of oxygen atoms covalently bonded with uranium to the number of uranium atoms) in the fuel pellets, thus leading to an increase in thermal conductivity and a reduction in fuel pellet deformation in a nuclear reactor.

The technical result is achieved with the use of gadolinium hydroxycarbonate as a burnable absorber in the method of producing nuclear fuel pellets with a burnable absorber, including preparation of triuranium octoxide with a burnable absorber, preparation of a molding powder, compression molding, sintering, and polishing.

The compressed fuel is sintered in reducing environments (inter alia with the addition of N₂), gases supplied are saturated with water vapour, wherein the humidity of the sintering atmosphere is from 8000-15000 ppm (depending on the amount of burnable absorber), and the sintering temperature is 1650-1750°C. In addition, the amount of burnable absorber in the fuel pellets is 1.50 ... 12.00% wt. During the stage of preparing a homogeneous charge, an additive of triuranium octoxide powder and/or triuranium octoxide with gadolinium in an amount up to 30 wt.% is introduced to uranium dioxide powder.

The method makes it possible to obtain a finely dispersed phase structure of (U,Gd)O₂ and with size and quantity controlled porosity, which, in turn, provides thermal stability of the fuel pellets during "after-sintering" and optimal values of the oxygen coefficient.

The oxygen coefficient value is the most important characteristic in terms of providing the thermophysical characteristics of nuclear fuel. Maintaining an O/M ratio ≥ 2.00 is the most important requirement for the pellets since this maximizes thermal conductivity and minimizes creep-induced deformation, resulting in dimensional stability of the pellets under irradiation. At present, apart from the additional oxygen entering the furnace, oxygen is also present in the additives Gd₂O₃ and U₃O₈ (or (UGd)₃O₈), the oxygen content of which affects the lattice parameter. Also, the lattice parameter varies with the amount of gadolinium oxide. Studies show that when the amount of Gd₂O₃ is from 0 to 40% MD, the O/M ratio is practically 2.00. As the amount of Gd₂O₃ increases over 50% MD, the O/M ratio decreases (<2.00) (Gorsky V.V. Uranium-gadolinium oxide fuel: Basic properties of Gd2O3 and UO2-Gd2O3// Atomic Engineering Abroad, 1989, No. 2. pp. 3-11). Therefore, the use of gadolinium hydroxycarbonate additives - Gd(OH)CO₃·xH₂O (or Gd(CO₃)₃·xH₂O), which decomposes to Gd₂O₃, at high temperatures in a reducing (H₂+N₂) furnace atmosphere, and forms gaseous products in the form of CO and H₂O, favorably affects sinterability of uranium-gadolinium pellets and the lattice stability with a high content of a burnable absorber (≥8.00 wt.%).

The additive Gd(OH)CO₃·xH₂O (or Gd(CO₃)₃·xH₂O) was obtained by dissolving Gd₂O₃ in nitric acid (HNO₃) with further precipitation of the basic salt with ammonium carbonate solution ((NH₄)₂CO₃). As a result of the deposition, an easily filterable powder with a high specific surface area is formed. So, for example, the tap density for Gd₂O₃ is 1.3 g/cm³, and for Gd(OH)CO₃·xH₂O - 0.3 g/cm³. This property of the powders mainly affects the density of the pellets.

### EMBODIMENT OF THE INVENTION

Examples of the implementation of the proposed method:
Initial powders U₃O₈ or (UGd)₃O₈ (up to 30%), Gd₂O₃ or Gd(OH)CO₃·xH₂O (or Gd (CO₃)₃·xH₂O) (1, 50 ... 12.00%) are premixed. The calculation of the addition of Gd(OH)CO₃·xH₂O (or Gd(CO₃)₃·xH₂O) is based on the molar mass of Gd₂O₃ and Gd(OH)CO₃·xH₂O (Gd(CO₃)₃·xH₂O), and the percentage of gadolinium in these compounds. Then mixing is carried out, to obtain a homogeneous mixture. The phase structure of UOz-Gd₂O₃ (or UO₂-Gd(OH)CO₃·xH₂O, (UO₂-Gd(CO₃)₃·xH₂O)) is thereby improved and a loose mixture with high bulk density is obtained due to agglomeration. Mixing of the prepared powdery charge with a solid lubricant is carried out in a mixer of the required volume. The resulting molding powder is compressed on a rotary press. Sintering of the pellets is carried out in a high-temperature furnace with a chamber temperature of 1650 - 1750°C, in a reducing atmosphere, inter alia with the addition of N₂. The gases supplied are saturated with water vapour, wherein the humidity of the sintering atmosphere is over 8000-15000 ppm (depending on the amount of Gd₂O₃). The polishing operation is carried out on a centerless polishing machine ("dry" method).

Variant 1: 15% (UGd)₃O₈ and 8.00% Gd₂O₃ were added to the initial UO₂ powder, mixed, and compacted. 0.2% aluminum stearate was added to the resulting mixture, and mixed. The molding powder was compressed on a rotary press and sintered at a temperature of 1650°C.

Variant 2: 15% (UGd)₃O₈, and 8.00% Gd₂O₃ were added to the initial UO₂ powder, mixed, and compacted. 0.2% DISED (bisstearylethylenediamine) was added to the resulting mixture, and mixed. The molding powder was compressed on a rotary press and sintered at a temperature of 1730°C.

Variant 3: 15% (UGd)₃O₈, and 8.00% Gd₂O₃ were added to the initial UO₂ powder, mixed, and compacted. 0.2% aluminum stearate was added to the resulting mixture, and mixed. The molding powder was compressed on a rotary press and sintered at a temperature of 1700°C.

Variant 4: 20% (UGd)₃O₈ and 8.00% Gd₂O₃ were added to the initial UO₂ powder, mixed, and compacted. 0.2% aluminum stearate was added to the resulting mixture, and mixed. The molding powder was compressed on a rotary press and sintered at a temperature of 1730°C.

Variant 5: 30% U₃O₈ and 8.00% Gd₂O₃ were added to the initial UOz powder, mixed and compacted. 0.2% aluminum stearate was added to the resulting mixture, and mixed. The molding powder was compressed on a rotary press and sintered at a temperature of 1730°C.

Variant 6: 15% (UGd)₃O₈ and 10.00% Gd₂O₃ were added to the initial UOz powder, mixed and compacted. 0.2% aluminum stearate was added to the resulting mixture, and mixed. The molding powder was compressed on a rotary press and sintered at a temperature of 1700°C.

Variant 7: 12% U₃O₈ and 1.50% Gd₂O₃ were added to the initial UO₂ powder, mixed and compacted. 0.3% DISED was added to the resulting mixture, and mixed. The molding powder was compressed on a rotary press and sintered at a temperature of 1700°C.

Variant 8: 12.00% Gd₂O₃ was added to the initial UO₂ powder, mixed and compacted. 0.2% DISED was added to the resulting mixture, and mixed. The molding powder was compressed on a rotary press and sintered at a temperature of 1700°C.

Variant 9: 20% (UGd)₃O₈ and 5.00% Gd₂O₃ were added to the initial UO₂ powder, mixed and compacted. 0.2% DISED was added to the resulting mixture, and mixed. The molding powder was compressed on a rotary press and sintered at a temperature of 1730°C.

Variant 10: 30% U₃O₈ and 3.35% Gd₂O₃ were added to the initial UO₂ powder, mixed and compacted. 0.2% DISED was added to the resulting mixture, and mixed. The molding powder was compressed on a rotary press and sintered at a temperature of 1750°C.

Variant 11: 15% (UGd)₃O₈ and 8.00% Gd₂O₃ were added to the initial UO₂ powder, mixed and compacted. 0.1% DISED was added to the resulting mixture, and mixed. The molding powder was compressed on a rotary press and sintered at a temperature of 1680°C.

Variant 12: 15% (UGd)₃O₈ and 11.80% Gd(OH)CO₃·xH₂O were added to the initial UO₂ powder, mixed and compacted. 0.1% DISED was added to the resulting mixture, and mixed. The molding powder was compressed on a rotary press and sintered at a temperature of 1680°C.

Manufacturing modes are presented in table 1.

**Table 1.**

| Variant | Gd₂O₃, % | U₃O₈, % | Solid lubricant,% | Sintering temperature, °C | Sintering time, h |
|---|---|---|---|---|---|
| 1 | 8.00 | 15 | 0.2 (St. Al) | 1650 | 9.63 |
| 2 | 8.00 | 15 | 0.2 (DISED) | 1730 | 17.35 |
| 3 | 8.00 | 15 | 0.2 (St. Al) | 1700 | 19.30 |
| 4 | 8.00 | 20 | 0.2 (St. Al) | 1730 | 23.14 |
| 5 | 8.00 | 30 | 0.2 (St. Al) | 1730 | 23.14 |
| 6 | 10,00 | 15 | 0.2 (St. Al) | 1700 | 5.77 |
| 7 | 1.50 | 12 | 0.3 (DISED) | 1700 | 34.70 |
| 8 | 12.00 | - | 0.2 (DISED) | 1700 | 11.55 |
| 9 | 5.00 | 20 | 0.2 (DISED) | 1730 | 17.35 |
| 10 | 3.35 | 30 | 0.2 (DISED) | 1750 | 11.55 |
| 11 | 8.00 | 15 | 0.1 (DISED) | 1680 | 5.77 |
| 12 | 8.00 (11.80 GdOHCO₃) | 15 | 0.1 (DISED) | 1680 | 5.77 |

The quality characteristics of uranium-gadolinium pellets for each manufacturing variant are shown in Table 2:

**Table 2.**

| Variant | Gd₂O₃, % | Density of sintered pellets, g/cm³ | Volume fraction of open pores (VOP),% | Proportion of the thin section area occupied by a solid solution | Oxygen coefficient, O/U | Average effective grain diameter, micron | After-sinterability, % |
|---|---|---|---|---|---|---|---|
| 1 | 8.00 | 10.44 - 10.50 | <0.30 | > 98.9 | - | 9,7 | 0.19 * |
| 2 | 8.00 | 10.50 - 10.55 | <0.30 | > 98.9 | - | 11.4 | 0.26 * |
| 3 | 8.00 | 10.53 - 10.60 | <0.30 | 98.8 | - | 12.8 | 0.17 * |
| 4 | 8.00 | 10.23 - 10.25 | <0.30 | > 98.9 | 2.0516 | 16.3 | - |
| 5 | 8.00 | 10.21 - 10.23 | <0.30 | > 98.9 | 2.0537 | 16.6 | 0.06 * |
| 6 | 10,00 | 10.31 - 10.39 | <0.30 | 98.4 | 2.0703 | 11.5 | - |
| 7 | 1.50 | 10.29 - 10.43 | <0.30 | 98.9 | 2.0201 | 11.5 | 0.56 * |
| 8 | 12.00 | 10.41 - 10.44 | <0.30 | 98.9 | 2.0993 | 14.9 | 0.08 ** |
| 9 | 5.00 | 10.54 - 10.56 | <0.30 | 98.7 | 2.0323 | 15.5 | 0.07 ** |
| 10 | 3.35 | 10.57 - 10.60 | <0.30 | 98.6 | 2.0218 | 11.5 | 0.06 ** |
| 11 | 8.00 | 10.47-10.55 | <0.30 | > 98.9 | 2.0426 | 13.4 | 0.04 ** |
| 12 | 8.00 in pellets (11.80 GdOHCO₃ in powders) | 10.38-10.51 | <0.30 | > 98.9 | 2.0516 | 11.5 | 0.01 ** |

| | | | | | | | |
|---|---|---|---|---|---|---|---|
| ^{∗} control of after-sinterability by density ^{∗∗} control of after-sinterability by diameter | | | | | | | |

It follows from Table 2 that the density, oxygen coefficient, thermal stability, "after-sinterability" and microstructure of the claimed pellets, depending on the variant of their manufacturing method, meet the regulatory requirements of the current technical specifications, and some options also meet the perspective requirements for the new generation uranium-gadolinium oxide fuel pellets.

The analysis of the results given in Table 2 has shown that the pellets with the addition of Gd(OH)CO₃·xH₂O (or Gd(CO₃)₃·xH₂O) according to the variant 12 as compared with the variant 11 (with Gd₂O₃) differ in that the average value of the oxygen ratio increased by 0.01 (the absolute accuracy of the determination method is 0.0045 at P = 0.95), while the other characteristics are virtually the same as for the other variants with the addition of Gd₂O₃.

Thus, the described method has an advantage over the currently known methods of making nuclear fuel pellets with a burnable absorber, in terms of using gadolinium hydroxycarbonate as a burnable absorber, providing optimal and promising requirements for the characteristics of fuel tablets (oxygen coefficient, sintered pellets density, volume fraction of open pores, grain diameter, after-sinterability).

### BRIEF DESCRIPTION OF DRAWINGS

The invention is explained by the illustrations:

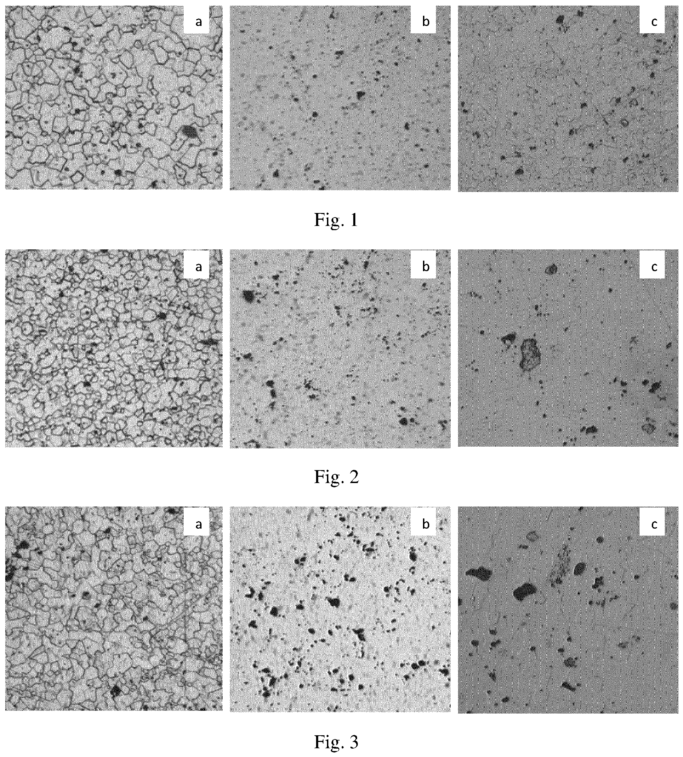

FIG. 1 shows a characteristic microstructure for the manufacturing variant 1; a) - the average effective grain diameter (9.7 µm); b) - porosity; c) - phase composition.
FIG. 2 - characteristic microstructure for the manufacturing variant 2; a) - the average effective grain diameter (11.4 µm); b) - porosity; c) - phase composition.
FIG. 3 - characteristic microstructure for the manufacturing variant 3; a) - the average effective grain diameter (12.8 µm); b) - porosity; c) - phase composition.

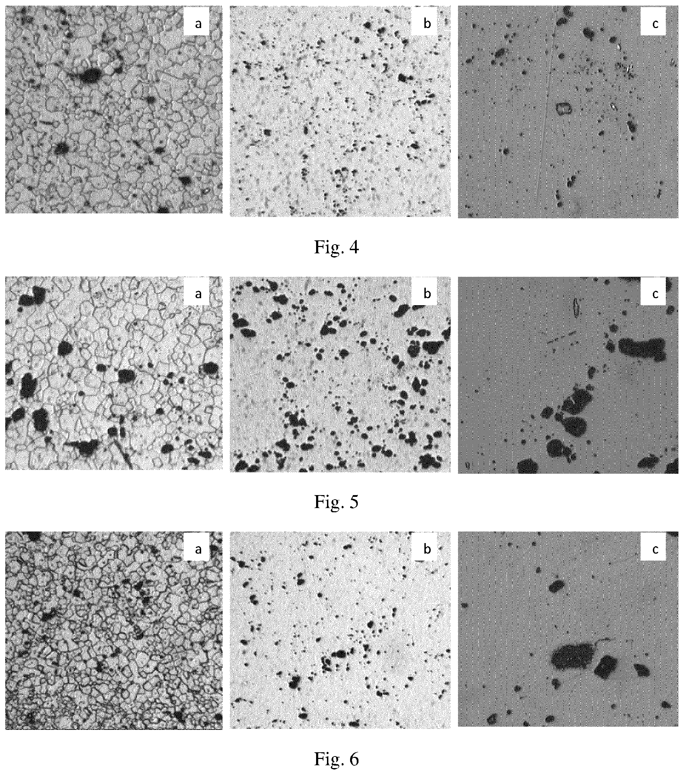

FIG. 4 - characteristic microstructure for the manufacturing variant 4; a) - the average effective grain diameter (16.3 µm); b) - porosity; c) - phase composition.
FIG. 5 - characteristic microstructure for the manufacturing variant 5; a) - the average effective grain diameter (16.6 µm); b) - porosity; c) - phase composition.
FIG. 6 - characteristic microstructure for the manufacturing variant 6; a) - average effective grain diameter (11.5 µm); b) - porosity; c) - phase composition.

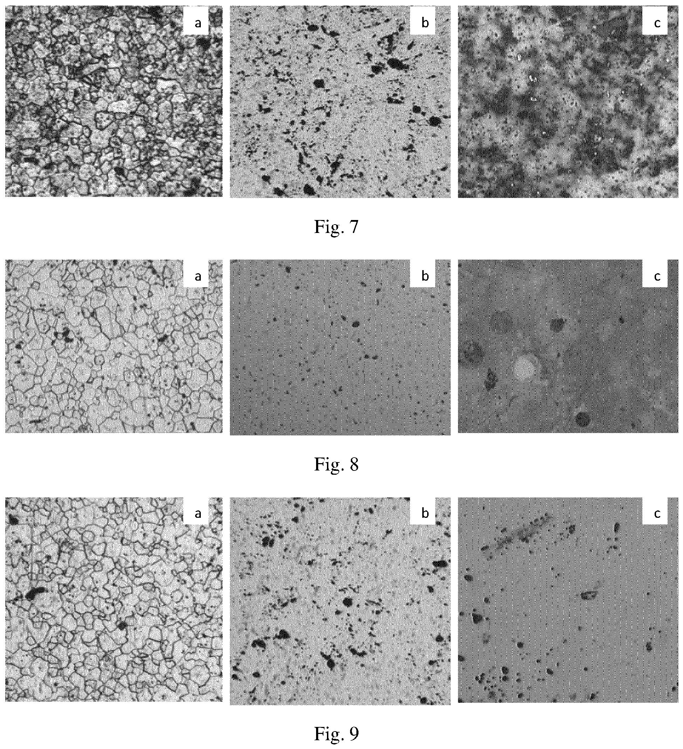

FIG. 7 - characteristic microstructure for the manufacturing variant 7; a) - average effective grain diameter (11.5 µm); b) - porosity; c) - phase composition.
FIG. 8 - characteristic microstructure for the manufacturing variant 8; a) - the average effective grain diameter (14.9 µm); b) - porosity; c) - phase composition.
FIG. 9 - characteristic microstructure for the manufacturing variant 9; a) - the average effective grain diameter (15.5 µm); b) - porosity; c) - phase composition.

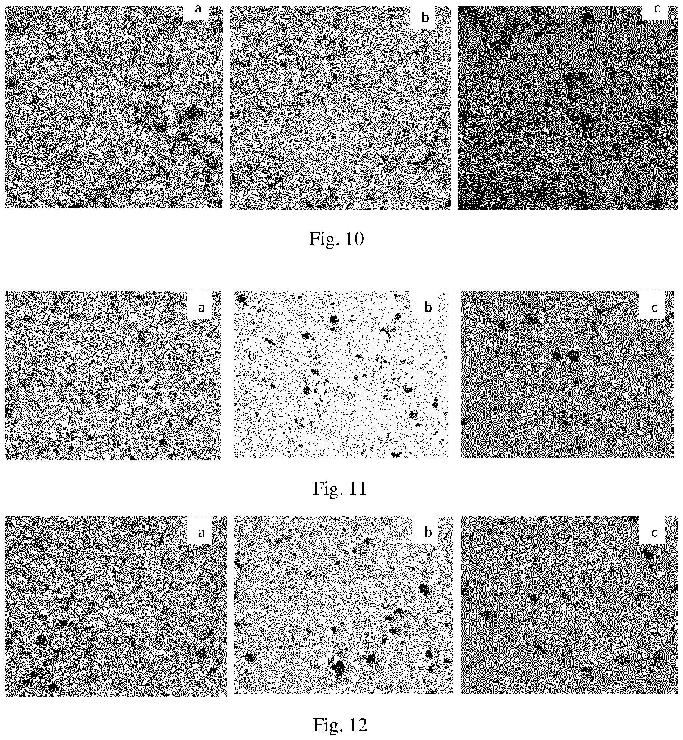

FIG. 10 - characteristic microstructure for the manufacturing variant 10; a) - average effective grain diameter (11.5 µm); b) - porosity; c) - phase composition.
FIG. 11 - characteristic microstructure for the manufacturing variant 11; a) - the average effective grain diameter (13.4 µm); b) - porosity; c) - phase composition.
FIG. 12 - characteristic microstructure for the manufacturing variant 12; a) - average effective grain diameter (11.5 µm); b) - porosity; c) - phase composition.

## Claims

1. A method of producing nuclear fuel pellets with a burnable absorber, comprising preparing triuranium octoxide with a burnable absorber, preparing a molding powder therefrom, followed by its compression molding, sintering and polishing, **characterized in that** gadolinium hydroxycarbonate Gd(OH)CO₃ xH₂O, or Gd(CO₃)₃ xH₂O is used as the burnable absorber.

2. The method according to claim 1, **characterized in that** the sintering of the compression molded fuel is carried out in reducing environments, inter alia with the addition of N₂, and gases supplied are saturated with water vapour, wherein the humidity of the sintering atmosphere is over 8000-15000 ppm, depending on the amount of the burnable absorber, and the sintering temperature is 1650-1750°C.

3. The method according to claim 1, **characterized in that** the amount of burnable absorber in the fuel pellets is 1.50 - 12.00% wt.

4. The method according to claim 1, **characterized in that** triuranium octoxide powder and/or triuranium octoxide with gadolinium is added in an amount of up to 30 wt% to uranium dioxide powder during the stage of preparing a homogeneous charge.

## Patentansprüche

1. Verfahren zur Herstellung von Kernbrennstoffpellets mit einem brennbaren Absorber, umfassend die Herstellung von Triuranoctoxid mit einem brennbaren Absorber, die Herstellung eines Formpulvers daraus, gefolgt von dessen Formpressen, Sintern und Polieren, **dadurch gekennzeichnet, dass** Gadoliniumhydroxycarbonat Gd(OH)CO₃ xH₂O oder Gd(CO₃)₃ xH₂O als brennbarer Absorber verwendet wird.

2. Verfahren nach Anspruch 1, **dadurch gekennzeichnet, dass** die Sinterung des formgepressten Brennstoffs in reduzierenden Umgebungen unter anderem mit dem Zusatz von N₂ durchgeführt wird und die zugeführten Gase mit Wasserdampf gesättigt sind, wobei die Feuchtigkeit der Sinteratmosphäre über 8000-15000 ppm liegt, abhängig von der Menge des brennbaren Absorbers und die Sintertemperatur 1650-1750°C beträgt.

3. Verfahren nach Anspruch 1, **dadurch gekennzeichnet, dass** die Menge an brennbarem Absorber in den Brennstoffpellets 1.50 - 12.00 Gew.-% beträgt.

4. Verfahren nach Anspruch 1, **dadurch gekennzeichnet, dass** Triuranoctoxid-Pulver und/oder Triuranoctoxid mit Gadolinium in einer Menge von bis zu 30 Gew.-% dem Urandioxid-Pulver während der Stufe der Herstellung einer homogenen Ladung zugesetzt wird.

## Revendications

1. Méthode de production de pastilles de combustible nucléaire avec un absorbeur consommable, comprenant la préparation d'octoxyde de triuranium avec un absorbeur consommable, la préparation d'une poudre de moulage à partir de celui-ci, suivie de son moulage par compression, de son frittage et polissage, **caractérisée en ce que** l'hydroxycarbonate de gadolinium Gd(OH)CO₃ xH₂O ou Gd(CO₃)₃ xH₂O est utilisé en tant qu'absorbeur consommable.

2. Méthode selon la revendication 1, **caractérisée en ce que** le frittage du combustible moulé par compression est effectué dans des environnements réducteurs, entre autres avec l'ajout de N₂ et gaz saturés en vapeur d'eau, dans laquelle l'humidité de l'atmosphère de frittage est supérieure à 8000-15000 ppm en fonction de la quantité d'absorbeur consommable, et la température de frittage est de 1650-1750°C.

3. Méthode selon la revendication 1, **caractérisée en ce que** la quantité d'absorbeur consommable dans les pastilles de combustible est comprise entre 1.50 - 12.00 % en poids.

4. Méthode selon la revendication 1, **caractérisée en ce que** la poudre d'octoxyde de triuranium et/ou l'octoxyde de triuranium avec gadolinium est ajoutée à la poudre de dioxyde d'uranium dans une quantité allant jusqu'à 30 % en poids au cours de l'étape de préparation d'une charge homogène.
